# EUROPÄISCHE PATENTSCHRIFT

(11) **EP 0 491 423 B1**
(45) Veröffentlichungstag und Bekanntmachung des Hinweises auf die Patenterteilung: **08.11.1995**
(21) Anmeldenummer: 91203222.4
(22) Anmeldetag: 10.12.1991
(51) Int. Cl.: H04N 5/52

(54) **Schaltungsanordnung zum Regeln der Amplitude eines Fernsehsignals**
Circuit arrangement for amplitude control of a television signal
Circuit à réglage de l'amplitude d'un signal de télévision

(30) Priorität: 17.12.1990 DE 4040298
(43) Veröffentlichungstag der Anmeldung: 24.06.1992
(73) Patentinhaber: Philips Patentverwaltung GmbH, 22335 Hamburg (DE); Philips Electronics N.V., 5621 BA Eindhoven (NL)
(72) Erfinder: Brilka, Joachim, W-2000 Hamburg 70 (DE); Weltersbach, Wolfgang, W-2000 Hamburg 54 (DE)
(74) Vertreter: Peters, Carl Heinrich, Dipl.-Ing.

(56) Entgegenhaltungen:
- DD-C- 242 709
- DE-A- 2 921 777
- DE-B- 2 013 507
- US-A- 3 558 816
- US-A- 4 209 805

## Beschreibung

Die Erfindung bezieht sich auf eine Schaltungsanordnung zum Regeln der Amplitude eines Fernsehsignals in einer Fernseh-Empfangsanordnung, mit einem in seiner Verstärkung einstellbaren Fernsehsignal-Verstärker, einem ersten Detektor zum Ermitteln eines einem weißen Bildinhalt entsprechenden Signalpegels (Weißwert) im Fernsehsignal und einer Regelsignal-Erzeugungsschaltung, die aus dem detektierten Signalpegel ein erstes Regelsignal ableitet und es dem Fernsehsignal-Verstärker zum Einstellen seiner Verstärkung zuführt.

Aus dem "Valvo Datenbuch 'Integrierte Analogschaltungen für Fernseh- und Videogeräte'", Januar 1990, Seiten 267 ff, ist ein Multistandard-ZF-Verstärker/Demodulator bekannt, der einen in seiner Verstärkung steuerbaren ZF-Verstärker zum Verstärken eines Fernsehsignals in der ZF-Frequenzlage umfaßt. Bei dieser Schaltungsanordnung wird in einem AGC-Spitzengleichrichter ein Steuersignal zum Steuern der Verstärkung des ZF-Verstärkers erzeugt und dem ZF-Verstärker zugeleitet. Mit diesem AGC-Spitzengleichrichter wird der Spitzen-, d.h. der Weißwert des eingehenden ZF-Fernsehsignals detektiert.

Bei der bekannten Schaltungsanordnung wird somit die Amplitude des zu verstärkenden und nachfolgenden Signalverarbeitungsschaltungen bereitzustellenden Signals nach einem darin enthaltenen Weißwert, d.h. einem Signalwert, der einem weißen Bildinhalt entspricht, nachgeregelt. Es zeigt sich, daß bei dieser Regelung Fehler auftreten können, wenn das zugeführte Fernsehsignal über einen bestimmten Zeitabschnitt hinaus einen solchen, definierten Weißwert nicht enthält. Dies kann einerseits auftreten bei starken Pegelschwankungen des von der Fernseh-Empfangsanordnung empfangenen, hochfrequenten Signals, z.B. beim Umschalten von einer Fernsehsignalquelle auf eine andere, beispielsweise bei einer Senderwahl. Auch können in der laufenden Übertragung eines Fernsehsignals Signalformen auftreten, bei denen ein definierter Weißwert nicht mehr übertragen wird. Insbesondere ist es zum Erzielen einer guten Regelung der Amplitude eines Fernsehsignals üblich, zu bestimmten Zeitpunkten sogenannte Weißimpulse zu übertragen, d.h. Signalabschnitte mit einem definierten Pegel, der als Weißwert von der Amplitudenregelung angenommen wird. Fehlen nun diese Weißimpulse, können sich daraus Regelfehler einstellen, die zu einer merkbaren Veränderung der Helligkeit des mit dem Fernsehsignal dargestellten Fernsehbildes führen. Auch kann eine Regelungsinstabilität auftreten.

Aus dem vorstehend genannten Datenhandbuch für den Schaltkreis TDA 3843 ist außerdem bekannt, einen Detektor im Falle eines AM-Tonsignals als Mittelwertdetektor arbeiten zu lassen. Mit einem solchen Detektor könnte der Mittelwert der Amplitude des empfangenen Fernsehsignals festgestellt und als Meßgröße zur Bestimmung der Steuergröße für den steuerbaren ZF-Verstärker ausgewertet werden. Dies hat jedoch den Nachteil, daß dadurch der detektierte Wert vom Bildinhalt stark abhängig wird. Bei Darstellung von Fernsehbildern mit überwiegend dunklem Bildinhalt ergibt sich daher ebenfalls eine Veränderung der geregelten Amplitude zu unerwünscht hohen Werten, die zu einer fehlerhaften Aufhellung des Bildinhalts führen.

Aus der DE-C 36 18 873 ist eine Schaltungsanordnung zum Regeln der Amplitude eines Fernsehsignals mit einem Detektor zum Ermitteln eines Signalpegels im Fernsehsignal bekannt, in der der Detektor als solchen Signalpegel den Schwarzwert im Fernsehsignal ermittelt, d.h. den Wert im Fernsehsignal, der einem schwarzen Bildinhalt entspricht. Mit einer derartigen Schaltungsanordnung sind zwar die vorstehend beschriebenen Schwierigkeiten bei der Erfassung eines korrekten Weißwertes umgangen, es hat sich jedoch gezeigt, daß auch der Schwarzwert in manchen Fernsehsignalen Schwankungen unterworfen ist, die eine derart ausgebildete Regelung in ihrer Zuverlässigkeit einschränken.

Aus der US-A- 3 558 816 ist es außerdem bekannt, einen zweiten Detektor zum Ermitteln eines einem schwarzen Bildinhalt entsprechenden Signalpegels (Schwarzwert) im Fernsehsignal zu verwenden, wobei der Unterschied zwischen dem Schwarzwert und dem Weißwert dem Dynamikbereich entspricht, und wobei dieser Unterschied zur Regelsignalformung herangezogen wird.

Bei den vorstehenden Regelungen, insbesondere der Regelung auf den Weißwert, sind große Regelzeitkonstanten erforderlich. Bei kurzzeitigen Veränderungen der Amplituden der der Fernseh-Empfangsanordnung zugeführten Fernsehsignale, insbesondere der hochfrequenten Signale, treten unerwünschte Übersteuerungen bzw. Bildausfälle auf.

Der Erfindung liegt die Aufgabe zugrunde, eine Schaltungsanordnung eingangs genannten Art zu schaffen, die eine gegen Schwankungen in der Amplitude des von der Fernseh-Empfangsanordnung empfangenen Signals, gegen den Ausfall der Weißimpulse und gegen Schwankungen des Schwarzwertes wenigstens weitgehend unempfindliche und schnell reagierende Regelung gewährleistet.

Diese Aufgabe wird erfindungsgemäß bei einer Schaltungsanordnung gemäß den charakterisierenden Merkmalen des Hauptanspruchs gelöst durch eine Vergleichsschaltung zum Vergleichen des Schwarzwertes mit wenigstens einem Referenzwert und zum Abgeben eines zusätzlichen Regelsignals beim Über- bzw. Unterschreiten des Referenzwertes durch den Schwarzwert, wobei das zusätzliche Regelsignal zum zusätzlichen Regeln der Verstärkung des Fernsehsignal-Verstärkers herangezogen wird.

Bei der erfindungsgemäßen Schaltungsanordnung wird somit auf der sogenannten Spitzenweißregelung, d.h. der Regelung der Amplitude nach dem Weißwert, aufgebaut und diese durch ein zusätzliches Regelsignal ergänzt, das aus den zeitlichen Änderungen des Schwarzwertes abgeleitet wird. Dadurch kann verhindert werden, daß die Regelung außer Tritt gerät, wenn das erste Regelsignal z.B. aufgrund des Wegfalls der Weißimpulse oder anderer Störungen mit gleicher Folge für die Regelung der Amplitude des Fernsehsignals zeitweise nicht mehr benutzbar ist. Dabei besteht die Möglichkeit, die Abweichung von der idealen Amplitude des Fernsehsignals lediglich in einer Richtung, d.h. nur zu größeren oder nur zu kleineren Werten hin, zu überwachen. Beim Ausfall der Weißimpulse oder eines vergleichbaren, vom ersten Detektor ausgewerteten Signalpegels im Fernsehsignal wird das zusätzliche Regelsignal beim Überschreiten eines (ersten) Referenzwertes durch den Schwarzwert erzeugt und durch dieses zusätzliche Regelsignal eine ungerechtfertigte Erhöhung der Amplitude des Fernsehsignals unterdrückt. Bei plötzlichen Pegelschwankungen des Fernsehsignals zu kleinen Signalen hin, beispielsweise beim Umschalten der Fernsehsignalquelle oder bei Empfangsstörungen, fällt ebenfalls der Weißwert in der bis dahin vorliegenden Höhe aus. In diesem Fall wird das zusätzliche Regelsignal beim Unterschreiten eines (zweiten) Referenzwertes durch den Schwarzwert gebildet, um ein entsprechendes erstes Regelsignal nachzubilden, durch das die Amplitude des Fernsehsignals erhöht wird.

Auf diese Weise wird mit einfachen Mitteln eine sehr gute Störsicherheit der Amplitudenregelung erreicht.

Vorteilhaft wird das zusätzliche Regelsignal dem ersten Regelsignal überlagert. Der Aufbau der Schaltungsanordnung wird dadurch vereinfacht, weil nur ein als Stellglied wirkender Fernsehsignal-Verstärker benötigt wird. Außerdem wird eine sehr stabile Regelung über nur einen Regelkreis - allerdings mit zwei Anordnungen zur Gewinnung von einander unabhängigen Regelsignalen - erhalten.

Das zusätzliche Regelsignal dient weiterhin bevorzugt zum schnellen, groben Ausregeln von Schwankungen des Fernsehsignals. Insbesondere wird für die Wirkung des zusätzlichen Regelsignals auf den einstellbaren Fernsehsignal-Verstärker wenigstens eine wesentlich geringere Regelzeitkonstante gewählt, als sie für die Amplitudenregelung nach dem Weißwert vorliegt. Die erfindungsgemäße, kombinierte Regelung nutzt dann den Weißwert zum Ausregeln und Glätten kleiner, langsamer Schwankungen und schafft somit eine stabile, gleichförmig ausgeregelte Amplitude des Fernsehsignals. Die zusätzliche Regelung der Verstärkung des Fernsehsignal-Verstärkers wird dann erst bei größeren Amplitudenschwankungen im Fernsehsignal wirksam und sorgt für deren schnellen Ausgleich, z.B. innerhalb zweier Bildperioden, so daß nach Beendigung des Eingriffs des zusätzlichen Regelsignals mit dem ersten Regelsignal wiederum eine Feinregelung vorgenommen werden kann. Beim Umschalten auf ein Fernsehsignal einer anderen Fernsehsignalquelle (z.B. Senderwechsel) wird eine kurze Einschwingzeit der Regelung erreicht.

Weitere, vorteilhafte Ausgestaltungen der Erfindung sind in den abhängigen Ansprüchen dargestellt.

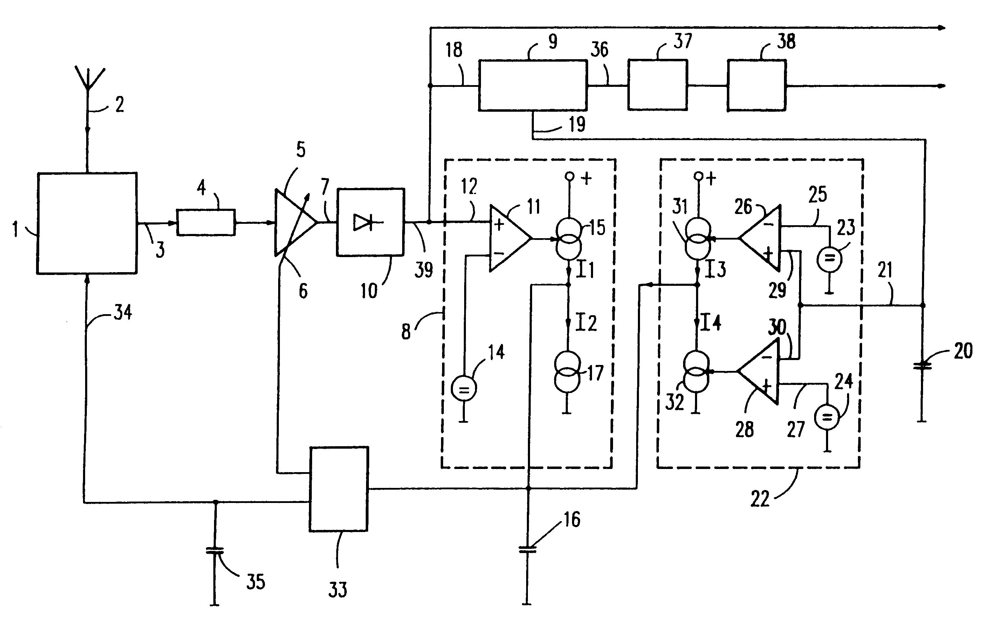

Die Figur zeigt ein Blockschaltbild einer bevorzugten Ausführungsform der Erfindung. Darin ist mit 1 eine Hochfrequenz-Empfangsschaltung (Tuner) bezeichnet, die über eine Antenne 2 eine Vielzahl von Fernsehsignalen aus unterschiedlichen Fernsehsignalquellen zugeführt erhält. Anstelle der Hochfrequenz-Empfangsschaltung, die im übrigen auch von einem Fernsehsignalträger-Wiedergabegerät gespeist werden kann, können auch andere Fernsehsignalquellen treten.

Von der Hochfrequenz-Empfangsschaltung 1 wird an einem Ausgang 3 ein auf eine Trägerfrequenz moduliertes Fernsehsignal abgegeben. Insbesondere entspricht diese Trägerfrequenz einer für die Verarbeitung von Fernsehsignalen üblichen Zwischenfrequenz. Auf diese Zwischenfrequenz sind Bildsignale in sogenannter positiver Modulation aufmoduliert. Dabei entsprechen hohe Amplituden des Fernsehsignals in der Zwischenfrequenzebene einem weißen Bildinhalt, niedrige Amplituden einem schwarzen Bildinhalt.

Das Fernsehsignal wird vom Ausgang 3 der Hochfrequenz-Empfangsschaltung 1 über ein Filter 4 einem Fernsehsignal-Verstärker 5 zugeführt, der in seiner Verstärkung über einen Steuereingang 6 einstellbar ist. Durch die Einstellung der Verstärkung wird erreicht, daß das am Ausgang 7 des Fernsehsignal-Verstärkers 5 abgegebene, verstärkte Fernsehsignal stets mit einer definierten Amplitude vorliegt.

Das Fernsehsignal vom Ausgang 7 des Fernsehsignal-Verstärkers 5 wird einem ersten Detektor 8 zum Ermitteln eines einem weißen Bildinhalt entsprechenden Signalpegels, d.h. des Weißwertes, im Fernsehsignal sowie einem zweiten Detektor 9 zum Ermitteln eines einem schwarzen Bildinhalt entsprechenden Signalpegels, d.h. des Schwarzwertes, im Fernsehsignal zugeleitet. Da das Fernsehsignal auf die Trägerfrequenz moduliert ist, die Detektoren jedoch das Fernsehsignal im sogenannten Basisband verarbeiten sollen, ist zwischen dem Fernsehsignal-Verstärker 5 und den Detektoren 8, 9 eine Demodulationsanordnung 10 zum Demodulieren des Fernsehsignals angeordnet.

Während der zweite Detektor 9 zum Ermitteln des Schwarzwertes vorzugsweise eine in der DE-C-36 18 873 beschriebene Bauform aufweist, auf die an dieser Stelle ausdrücklich Bezug genommen werden soll, enthält der erste Detektor 8 einen ersten Komparator 11, dem an einem ersten, positiven Eingang 12 das Fernsehsignal und an einem zweiten, negativen Eingang 13 eine konstante Spannung von einer Gleichspannungsquelle 14 zugeführt wird. Der erste Komparator 11 bildet in an sich bekannter Weise eine Grenzwertstufe, in der der Wert des Fernsehsignals mit einem im wesentlichen konstanten Referenzwert von der Gleichspannungsquelle 14 verglichen wird. Der erste Komparator 11 verbindet einen als Stromquelle 15 ausgebildeten, ersten Konstantwertgeber abwechselnd mit einem einen Speicher bildenden Kondensator 16, wenn der Wert des Fernsehsignals größer als der von der Gleichspannungsquelle 14 abgegebene Referenzwert ist, und trennt die den ersten Konstantwertgeber bildende Stromquelle 15 von dem Kondensator 16, wenn der Wert des Fernsehsignals kleiner als der Referenzwert ist. Die Stromquelle 15 ist dazu bevorzugt durch den ersten Komparator 11 schaltbar ausgebildet.

Eine zweite, einen zweiten Konstantwertgeber bildende Stromquelle 17 ist dagegen fest mit dem den Speicher bildenden Kondensator 16 verbunden. Durch Verbindung des Speichers (Kondensator 16) mit dem ersten Konstantwertgeber (Stromquelle 15) wird nun dadurch, daß der von der Stromquelle 15 gelieferte Strom I1 größer ist als der durch die zweite Stromquelle 17 hervorgerufene Strom I2, der Wert im Speicher (Kondensator 16) erhöht, während er bei Verbindung allein mit dem zweiten Konstantwertgeber (zweite Stromquelle 17) erniedrigt wird, da der Strom I1 eine Aufladung und der Strom I2 eine Entladung des Kondensators 16 vornimmt. Das Verhältnis der von den Konstantwertgebern (Stromquellen 15, 17) abgegebenen Konstantwerte (Ströme I1, I2) ist derart gewählt, daß sich als Mittelwert im Speicher, d.h. als Mittelwert der am Kondensator 16 anliegenden Spannung, der Weißwert des Fernsehsignals einstellt. Dazu wird in der Regel der Strom I1 wesentlich größer sein als der Strom I2. Für die Ableitung des ersten Regelsignals aus dem so detektierten Signalpegel (Weißwert) im Fernsehsignal ist es außerdem vorteilhaft, daß im Sinne einer Feinregelung durch dieses Regelsignal die Umladung des Kondensators 16 durch die Ströme I1, I2 verhältnismäßig langsam vorgenommen wird. Dadurch ist die Regelung auch in der Lage, einerseits kurze Unregelmäßigkeiten im Fernsehsignal zu überbrücken und andererseits mit einem nur kurzzeitigen Auftreten des Weißwertes im Fernsehsignal (z.B. ein kurzer Weißimpuls je Halbbild) auszukommen.

Der zweite Detektor 9, dem das Fernsehsignal an seinem Eingang 18 zugeleitet wird, liefert an einem Schwarzwertausgang 19 eine dem Schwarzwert des Fernsehsignals entsprechende Spannung, die zur Aufladung eines Schwarzwert-Speicherkondensators 20 führt. Der Schwarzwert-Speicherkondensator 20 kann dabei für den zweiten Detektor 9 eine dem Kondensator 16 beim ersten Detektor 8 entsprechende Funktion übernehmen. Die dem Schwarzwert entsprechende Spannung wird vom Schwarzwert-Speicherkondensator 20 einem Eingang 21 einer Vergleichsschaltung 22 zugeleitet. Die Vergleichsschaltung 22 dient zum Vergleichen des Schwarzwertes mit zwei Referenzwerten und zum Abgeben eines zusätzlichen Regelsignals beim Überschreiten des größeren der Referenzwerte und beim Unterschreiten des kleineren der Referenzwerte durch den Schwarzwert. Das zusätzliche Regelsignal nimmt beim Überschreiten des größeren der Referenzwerte einen ersten Wert und beim Unterschreiten des kleineren der Referenzwerte einen zweiten Wert an. Die Referenzwerte werden durch die Vergleichsschaltung in Form zweier Gleichspannungsquellen 23, 24 bereitgestellt. Die den größeren Referenzwert liefernde Gleichspannungsquelle 23 ist mit dem negativen, d.h. invertierenden Eingang 25 eines zweiten Komparators 26, die Gleichspannungsquelle 24 für den kleineren Referenzwert mit dem positiven, d.h. nicht-invertierenden Eingang 27 eines dritten Komparators 28 verbunden. Dem positiven, d.h. nichtinvertierenden Eingang 29 des zweiten Komparators 26 und dem negativen, d.h. invertierenden Eingang 30 des dritten Komparators 28 wird gemeinsam vom Eingang 21 der Vergleichsschaltung 22 der Schwarzwert zugeführt. Überschreitet dieser den größeren Referenzwert, wird durch den zweiten Komparator 26 eine einen weiteren Konstantwertgeber bildende, dritte Stromquelle 31 eingeschaltet, von der ein Strom I3 als Aufladestrom in den als Speicher dienenden Kondensator 16 fließt. Entsprechend ist beim Unterschreiten des kleineren Referenzwertes von der Gleichspannungsquelle 24 über den dritten Komparator 28 eine vierte Stromquelle 32 eingeschaltet, die einen Strom I4 treibt, der als Entladestrom auf den Kondensator 16 wirkt. Die beiden, die weiteren Konstantwertgeber bildenden Stromquellen 31, 32 sind somit wahlweise mit dem den Speicher bildenden Kondensator 16 verbindbar. Die Stromquellen 31, 32 als weitere Konstantwertgeber leiten dem Kondensator 16 Ströme definierter Größe als Konstantwerte zu, wodurch ein definierter Umladevorgang und damit eine definierte Veränderung der an diesem Speicher anliegenden, zum Steuern des Fernsehsignal-Verstärkers 5 herangezogenen Spannung erhalten wird.

Im Vergleich zu den Strömen I1, I2 des ersten bzw. zweiten Konstantwertgebers (Stromquellen 15, 17) des ersten Detektors 8 sind die Ströme I3, I4 größer gewählt, um mit dem aus diesen Strömen gebildeten, zusätzlichen Regelsignal, dessen Wert entweder dem des Stromes I3, dem des Stromes I4 oder 0 entspricht, die Auf- bzw. Entladung des Kondensators 16 schneller erfolgen zu lassen als die Umladung dieses Kondensators 16 durch den ersten Detektor 8. Vorzugsweise wird der Strom I4 groß gegenüber I2, der Strom I1 groß gegenüber I3 und dieser wiederum größer als I2 gewählt. Das zusätzliche Regelsignal dient dann zum schnellen, groben Ausregeln von Schwankungen des Fernsehsignals und kann darüber hinaus bei fehlenden Weißimpulsen zur Stabilisierung der Amplitude des Fernsehsignals beitragen.

Im Kondensator 16 wird das zusätzliche Regelsignal von der Vergleichsschaltung 22, d.h. die Kombination der Ströme I3 und I4, dem vom ersten Detektor 8 detektierten Signalpegel überlagert. Dabei ist es für die grundsätzliche Funktion der beschriebenen Schaltungsanordnung unbedeutend, ob aus den Strömen vom ersten Detektor 8 und von der Vergleichsschaltung 22 zuerst getrennte Regelsignale geformt und diese - als erstes und als zusätzliches Regelsignal - einander überlagert werden, oder ob - wie im vorliegenden Ausführungsbeispiel - der vom ersten Detektor 8 detektierte Signalpegel mit dem von der Vergleichsschaltung 22 abgegebenen, von der Kombination der Ströme I3, I4 gebildeten zusätzlichen Regelsignal kombiniert und anschließend zu einem dem Steuereingang 6 zuzuleitenden Steuer- bzw. Regelsignal geformt wird. Ebensogut kann sowohl aus dem vom ersten Detektor 8 detektierten Signalpegel ein erstes Regelsignal abgeleitet werden, welches dann dem zusätzlichen Regelsignal überlagert wird, bevor dieses überlagerte Signal in einer passenden Form dem Steuereingang 6 zugeführt wird.

Im vorliegenden Ausführungsbeispiel wird die durch Überlagerung der Signale vom ersten Detektor 8 und von der Vergleichsschaltung 22 am Kondensator 16 gewonnene Spannung in einer Regelsignal-Erzeugungsschaltung 33 einerseits in ein Regelsignal für den Fernsehsignal-Verstärker 5 und andererseits in ein weiteres Verstärkungsregelsignal umgewandelt, durch das die Hochfrequenz-Empfangsschaltung 1 im Sinne einer Tuner-Verstärkungssteuerung über einen Steuereingang 34 beeinflußt werden kann. Die Amplitudenregelung erfolgt dann nicht mehr ausschließlich in der Zwischenfrequenzebene, wodurch weitere Verbesserungen in der Signalübertragung erzielt werden können. Mit dem Steuereingang 34 ist ein weiterer Speicherkondensator 35 verbunden, in dem das der Hochfrequenz-Empfangsschaltung 1 zuzuführende weitere Verstärkungsregelsignal gespeichert wird.

Die beschriebene Schaltungsanordnung wird bevorzugt in einem Gerät zum Empfangen und Verarbeiten eines Fernsehsignals in Kombination mit weiteren, für die Fernsehsignalverarbeitung erforderlichen Baugruppen angeordnet. Einige der dafür vorgesehenen Signalverbindungen sind in der Figur angedeutet. So ist dem zweiten Detektor 9, der den Schwarzwert im Fernsehsignal ermittelt, an einem weiteren Ausgang 36 eine aus einer Impulsabtrennstufe 37 und einer Identifikationsstufe 38 gebildete Fernsehsignalerkennungsschaltung angeschlossen. Vom Ausgang 39 der Demodulationsanordnung 10 wird außerdem das Fernsehsignal unmittelbar zur weiteren verarbeitung abgegriffen.

Die beschriebene Schaltungsanordnung wird bevorzugt - mit Ausnahme des Filters 4 und der Hochfrequenz-Empfangsschaltung 1 sowie ggf. der als Speicher benutzten Kondensatoren 16, 20, 35 - auf einem einzigen Halbleiterkörper integriert. Dabei ist der zusätzliche Aufwand im Vergleich zu Schaltungsanordnungen nach dem Stand der Technik gering. Da der zweite Detektor 9 sowohl für die Fernsehsignalerkennungsschaltung 37, 38 als auch für die erfindungsgemäße Regelung der Amplitude des Fernsehsignals ausgenutzt wird, muß in einem Fernsehgerät ggf. nur die sehr einfach aufgebaute Vergleichsschaltung 22 hinzugefügt werden. Dies kann sogar bei einem bereits fertig konzipierten Gerät nachträglich durch zusätzliche Bauelemente geschehen, deren Anzahl sehr gering gehalten werden kann. Auf diese Weise kann z.B. der integrierte Schaltkreis TDA 3842 einfach in seiner Funktion ergänzt werden. Insgesamt ergibt sich somit eine sehr flexible Einsatzmöglichkeit für die erfindungsgemäße Schaltungsanordnung und eine sehr rasche und einfache Umsetzung in einen praktischen Aufbau.

## Patentansprüche

1. Schaltungsanordnung zum Regeln der Amplitude eines Fernsehsignals in einer Fernseh-Empfangsanordnung, mit einem in seiner Verstärkung einstellbaren Fernsehsignal-Verstärker (5), einem ersten Detektor (8) zum Ermitteln eines einem weißen Bildinhalt entsprechenden Signalpegels (Weißwert) im Fernsehsignal und einer Regelsignal-Erzeugungsschaltung (33), die aus dem detektierten Signalpegel ein erstes Regelsignal ableitet und es dem Fernsehsignal-Verstärker (5) zum Einstellen seiner Verstärkung zuführt,
einem zweiten Detektor (9) zum Ermitteln eines einem schwarzen Bildinhalt entsprechenden Signalpegels (Schwarzwert) im Fernsehsignal, gekennzeichnet durch eine Vergleichsschaltung (22) zum Vergleichen des Schwarzwertes mit wenigstens einem Referenzwert und zum Abgeben eines zusätzlichen Regelsignals beim Über- bzw. Unterschreiten des Referenzwertes oder der Referenzwerte durch den Schwarzwert, wobei das zusätzliche Regelsignal zum zusätzlichen Regeln der Verstärkung des Fernsehsignal-Verstärkers (5) herangezogen wird.

2. Schaltungsanordnung nach Anspruch 1,
dadurch gekennzeichnet, daß das zusätzliche Regelsignal dem ersten Regelsignal überlagert wird.

3. Schaltungsanordnung nach Anspruch 1 oder 2,
dadurch gekennzeichnet, daß das zusätzliche Regelsignal zum schnellen, groben Ausregeln von Schwankungen des Fernsehsignals dient.

4. Schaltungsanordnung nach Anspruch 1, 2 oder 3,
dadurch gekennzeichnet, daß durch die Vergleichsschaltung (22) zwei Referenzwerte unterschiedlicher Größe bereitgestellt werden und daß das zusätzliche Regelsignal beim Überschreiten des größeren der Referenzwerte durch den Schwarzwert einen ersten Wert und beim Unterschreiten des kleineren der Referenzwerte durch den Schwarzwert einen zweiten Wert annimmt.

5. Schaltungsanordnung nach einem der vorhergehenden Ansprüche,
dadurch gekennzeichnet, daß dem Fernsehsignal-Verstärker (5) ein auf eine Trägerfrequenz moduliertes Fernsehsignal zugeleitet wird und zwischen dem Fernsehsignal-Verstärker (5) und dem ersten und dem zweiten Detektor (8) eine Demodulationsanordnung (10) zum Demodulieren des Fernsehsignals angeordnet ist.

6. Schaltungsanordnung nach einem der vorhergehenden Ansprüche,
dadurch gekennzeichnet, daß der erste Detektor (8) eine Grenzwertstufe (11) umfaßt, in der der Wert des Fernsehsignals mit einem im wesentlichen konstanten Referenzwert verglichen wird, und die einen ersten Konstantwertgeber (15) mit einem Speicher (16) verbindet, wenn der Wert des Fernsehsignals größer als der Referenzwert ist, und von dem Speicher (16) trennt, wenn der Wert des Fernsehsignals kleiner als der Referenzwert ist, daß ein zweiter Konstantwertgeber (17) fest mit dem Speicher (16) verbunden ist, daß durch Verbindung des Speichers (16) mit dem ersten Konstantwertgeber (15) der Wert im Speicher (16) erhöht und bei Verbindung allein mit dem zweiten Konstantwertgeber (17) erniedrigt wird und daß das Verhältnis der von den Konstantwertgebern (15, 17) abgegebenen Konstantwerte derart gewählt ist, daß sich als Mittelwert im Speicher (16) der Weißwert einstellt.

7. Schaltungsanordnung nach Anspruch 6,
dadurch gekennzeichnet, daß der Speicher (16) durch einen Kondensator und die Konstantwertgeber (15, 17) durch Stromquellen gebildet sind, die dem Kondensator Ströme definierter Größe als Konstantwerte zuleiten.

8. Schaltungsanordnung nach Anspruch 6 oder 7,
dadurch gekennzeichnet, daß die Vergleichsschaltung (22) wenigstens einen weiteren Konstantwertgeber (31, 32) zum Abgeben des zusätzlichen Regelsignals umfaßt, der mit dem Speicher (16) verbindbar ist.

9. Schaltungsanordnung nach Anspruch 8,
dadurch gekennzeichnet, daß der weitere oder die weiteren Konstantwertgeber (31, 32) durch eine weitere Stromquelle oder weitere Stromquellen gebildet ist oder sind, der oder die dem Kondensator einen Strom oder Ströme definierter Größe als Konstantwert zuleitet oder als Konstantwerte zuleiten.

10. Schaltungsanordnung nach Anspruch 9,
dadurch gekennzeichnet, daß durch den dem ersten Wert des zusätzlichen Regelsignals entsprechenden Strom eine Aufladung und durch den dem zweiten Wert des zusätzlichen Regelsignals entsprechenden Strom eine Entladung des den Speicher (16) bildenden Kondensators vorgenommen wird.

11. Schaltungsanordnung nach Anspruch 10,
dadurch gekennzeichnet, daß die Auf- und Entladung des Kondensators durch die das zusätzliche Regelsignal bildenden Ströme schneller erfolgt als eine Umladung durch den ersten Detektor (8) zum Ermitteln des Weißwertes.

12. Schaltungsanordnung nach einem der vorhergehenden Ansprüche,
dadurch gekennzeichnet, daß wenigstens der Fernsehsignal-Verstärker (5), der erste Detektor (8), der zweite Detektor (9), die Vergleichsschaltung (22) und die Regelsignal-Erzeugungsschaltung (33) auf einem gemeinsamen Halbleiterkörper integriert sind.

13. Schaltungsanordnung nach einem der Ansprüche 1 bis 11,
dadurch gekennzeichnet, daß der Fernsehsignal-Verstärker (5), der erste Detektor (8) und der zweite Detektor (9) auf einem gemeinsamen Halbleiterkörper integriert sind und die Vergleichsschaltung außerhalb dieses Halbleiterkörpers angeordnet ist.

## Claims

1. A circuit arrangement for controlling the amplitude of a television signal in a television receiver, including a gain-controllable television signal amplifier (5), a first detector (8) for determining a signal level (white level) corresponding to a white picture content in the television signal and a control signal generating circuit (33) deriving a first control signal from the detected signal level and applying it to the television signal amplifier (5) for controlling its gain, a second detector (9) for determining a signal level (black level) corresponding to a black picture content in the television signal, characterized by a comparison circuit (22) for comparing the black level with at least one reference value and for supplying an additional control signal when the black level exceeds or falls below the reference value or reference values, the additional control signal being used for additionally controlling the gain of the television signal amplifier (5).

2. A circuit arrangement as claimed in Claim 1, characterized in that the additional control signal is superposed on the first control signal.

3. A circuit arrangement as claimed in Claim 1 or 2, characterized in that the additional control signal is used for a rapid, coarse stabilization control of television signal fluctuations.

4. A circuit arrangement as claimed in Claim 1, 2 or 3, characterized in that two reference values of different magnitude are provided by the comparison circuit (22) and in that the additional control signal assumes a first value when the black level exceeds the larger one of the reference values and assumes a second value when the black level falls below the smaller one of the reference values.

5. A circuit arrangement as claimed in any one of the preceding Claims, characterized in that a carrier frequency-modulated television signal is applied to the television signal amplifier (5), and a demodulation arrangement (10) for demodulating the television signal is arranged between the television signal amplifier (5) and the first and the second detector (8).

6. A circuit arrangement as claimed in any one of the preceding Claims, characterized in that the first detector (8) comprises a limit value stage (11) in which the value of the television signal is compared with a substantially constant reference value and which connects a first constant value generator (15) to a memory (16) when the value of the television signal is larger than the reference value, and disconnects the memory (16) when the value of the television signal is smaller than the reference value, in that a second constant value generator (17) is fixedly connected to the memory (16), in that the value in the memory (16) is increased when the memory (16) is connected to the first constant value generator (15) and is decreased when it is connected only to the second constant value generator (17), and in that the ratio between the constant values supplied by the constant value generators (15, 17) is chosen to be such that a mean value in the memory (16) is adjusted to the white level.

7. A circuit arrangement as claimed in Claim 6, characterized in that the memory (16) is constituted by a capacitor and the constant value generators (15, 17) are constituted by current sources which apply currents of a defined value as constant values to the capacitor.

8. A circuit arrangement as claimed in Claim 6 or 7, characterized in that the comparison circuit (22) comprises at least one further constant value generator (31, 32) for supplying the additional control signal, which constant value generator is connectable to the memory (16).

9. A circuit arrangement as claimed in Claim 8, characterized in that the further constant value generator as further constant value generators (31, 32) are constituted by a further current source or further current sources which apply a current or currents of a defined value as a constant value or constant values to the capacitor.

10. A circuit arrangement as claimed in Claim 9, characterized in that the capacitor constituting the memory (16) is charged by the current corresponding to the first value of the additional control signal and discharged by the current corresponding to the second value of the additional control signal.

11. A circuit arrangement as claimed in Claim 10, characterized in that the charging and discharging of the capacitor by the currents constituting the additional control signal is effected more rapidly than a change of charge by means of the first detector (8) for determining the white level.

12. A circuit arrangement as claimed in any one of the preceding Claims, characterized in that at least the television signal amplifier (5), the first detector (8), the second detector (9), the comparison circuit (22) and the control signal generating circuit (33) are integrated on a common semiconductor body.

13. A circuit arrangement as claimed in any one of Claims 1 to 11, characterized in that the television signal amplifier (5), the first detector (8) and the second detector (9) are integrated on a common semiconductor body and the comparison circuit is arranged outside said semiconductor body.

## Revendications

1. Montage de circuit pour la régulation de l'amplitude d'un signal de télévision dans un récepteur de télévision, comprenant un amplificateur de signaux de télévision (5) dont l'amplification est réglable, un premier détecteur (8) pour déterminer un niveau de signal (niveau de blanc) correspondant à un contenu d'image blanc dans le signal de télévision et un circuit de production d'un signal de régulation (33), qui tire du niveau de signal détecté un premier signal de régulation et l'achemine à l'amplificateur de signaux de télévision (5) pour régler son amplification, un deuxième détecteur (9) pour déterminer un niveau de signal (niveau de noir) correspondant à un contenu d'image noir dans le signal de télévision, caractérisé par un circuit de comparaison (22) pour comparer le niveau du noir à au moins une valeur de référence et pour délivrer un signal de régulation supplémentaire lorsque le niveau du noir passe au-dessus ou au-dessous de la valeur ou des valeurs de référence, le signal de régulation supplémentaire étant utilisé pour la régulation supplémentaire de l'amplification de l'amplificateur de signaux de télévision (5).

2. Montage de circuit selon la revendication 1, caractérisé en ce que le signal de régulation supplémentaire est superposé au premier signal de régulation.

3. Montage de circuit selon la revendication 1 ou 2, caractérisé en ce que le signal de régulation supplémentaire sert à la compensation grossière et rapide de fluctuations du signal de télévision.

4. Montage de circuit selon la revendication 1, 2 ou 3, caractérisé en ce que deux valeurs de référence de grandeur différente sont préparées par le circuit de comparaison (22) et en ce que le signal de régulation supplémentaire adopte une première valeur lorsque le niveau du noir se trouve au-dessus de la plus grande des valeurs de référence et une deuxième valeur lorsque le niveau du noir se trouve en dessous de la plus petite des valeurs de référence.

5. Montage de circuit selon l'une quelconque des revendications précédentes, caractérisé en ce qu'un signal de télévision modulé sur une fréquence porteuse est acheminé à l'amplificateur des signaux de télévision (5) et en ce qu'un circuit de démodulation (10) est agencé entre l'amplificateur de signaux de télévision (5) et le premier (8) et le deuxième (9) détecteurs pour démoduler le signal de télévision.

6. Montage de circuit selon l'une quelconque des revendications précédentes, caractérisé en ce que le premier détecteur (8) contient un étage de valeur limite (11), dans lequel la valeur du signal de télévision est comparée à une valeur de référence sensiblement constante, et le premier générateur de valeur constante (15) est raccordé à une mémoire (16) lorsque la valeur du signal de télévision est supérieure à la valeur de référence, et est déconnectée de la mémoire (16) lorsque la valeur du signal de télévision est inférieure à la valeur de référence, en ce qu'un deuxième générateur de valeur constante (17) est raccordé à la mémoire (16), en ce que, par liaison de la mémoire (16) au premier générateur de valeur constante (15), la valeur dans la mémoire (16) est augmentée et, par liaison uniquement au deuxième générateur de valeur constante (17), elle est diminuée, et en ce que le rapport des valeurs constantes délivrées par les générateurs de valeurs constantes (15, 17) est choisi, de telle sorte que le niveau de blanc soit réglé comme valeur moyenne dans la mémoire (16).

7. Montage de circuit selon la revendication 6, caractérisé en ce que la mémoire (16) est formée par un condensateur et les générateurs de valeurs constantes (15, 17) sont formés par des sources de courant qui acheminent au condensateur des courant de grandeur définie comme valeurs constantes.

8. Montage de circuit selon la revendication 6 ou 7, caractérisé en ce que le circuit de comparaison (22) comprend au moins un autre générateur de valeur constante (31, 32) pour délivrer le signal de régulation supplémentaire, qui peut être raccordé à la mémoire (16).

9. Montage de circuit selon la revendication 8, caractérisé en ce que l'autre ou les autres générateurs de valeurs constantes (31, 32) est ou sont formés par une autre source de courant ou d'autres sources de courant, qui acheminent au condensateur un ou des courants de grandeur définie comme valeurs constantes.

10. Montage de circuit selon la revendication 9, caractérisé en ce qu'une charge du condensateur formant la mémoire (16) est effectuée par le courant correspondant à la première valeur du signal de régulation supplémentaire et une décharge est effectuée par le courant correspondant à la deuxième valeur du signal de régulation supplémentaire.

11. Montage de circuit selon la revendication 10, caractérisé en ce que la charge et la décharge du condensateur par les courants formant le signal de régulation supplémentaire s'effectuent plus rapidement qu'un transfert de charge à travers le premier détecteur (8) pour obtenir le niveau du blanc.

12. Montage de circuit selon l'une quelconque des revendications précédentes, caractérisé en ce qu'au moins l'amplificateur de signaux de télévision (5), le premier détecteur (8), le deuxième détecteur (9), le circuit de comparaison (22) et le circuit de production de signaux de régulation (33) sont intégrés sur un corps à semi-conducteur commun.

13. Montage de circuit selon l'une quelconque des revendications 1 à 11, caractérisé en ce que l'amplificateur de signaux de télévision (5), le premier détecteur (8) et le deuxième détecteur (9) sont intégrés sur un corps à semi-conducteur commun et le circuit de comparaison est agencé à l'extérieur de ce corps à semi-conducteur.
